# EUROPEAN PATENT APPLICATION

(11) **EP 4 332 818 A1**
(43) Date of publication of application: **06.03.2024**
(21) Application number: 23193399.5
(22) Date of filing: 25.08.2023
(51) Int. Cl.: G06F 30/13, G06T 13/00, G06F 30/17, G06T 17/10, G06T 19/20, G06F 111/20

(54) **ADVANCED BUILDING SYSTEMS AND ELEMENTS FOR SPACE DESIGN**

(30) Priority: 29.08.2022 US 202217822855
(71) Applicant: Autodesk, Inc., San Francisco, CA 94105 (US)
(72) Inventor: Wold, Espen Kristian Wulff, 0484 Oslo (NO); Hallén, Martin, 1341 Slependen (NO); Karlsen, Markus Reppen, 0655 Oslo (NO); Chaudhry, Bilal Zia, 0276 Oslo (NO); Vatn, Klara Kristina, 0771 Oslo (NO); Bjelland, Arne Folkestad, Slependen, 1341 (US)
(74) Representative: Dendorfer, Claus

(57) **Abstract**

A method and system provide the ability to design a space in a computer-aided design (CAD) application. A 3D model is acquired. The space is designed by defining Elements including a parent and a child element. Each Element encapsulates a geometric model, and consists of metadata that provides a summary of contents in each Element that enables an outside process to handle each Element without access to the encapsulated geometric model. An arbitrary logic Program is structured to generate a list of the child Elements. The 3D model is edited and updated in real time. During the updating, the Program is reexecuted to update the child elements while attempting to conserve a hierarchical structure of the Elements. The updated 3D model is provided via a graphical user interface that enables editing of the geometric model and the Elements in the space.

## Description

### BACKGROUND OF THE INVENTION

### 1. Field of the Invention.

The present invention relates generally to three-dimensional (3D) building design systems in the architecture, engineering, and construction (AEC) industry, and in particular, to a method, apparatus, system, and article of manufacture for designing building spaces in a modular, easy-to-use manner.

### 2. Description of the Related Art.

Designers who are looking at specific designs for a particular space have many considerations. The design has to work within a space, by definition, and that requires a review of parameters from the existing space. The design process also requires a review of the design - the dimensions and/or the envelope. Such a design process is arduous, complicated, and takes time away from what architects and designers do. There is a need for an easier space design method that is modular, easy-to-use, and allows a designer to modify parameters associated with those modular spaces. To better understand such needs, a description of prior art design systems may be useful.

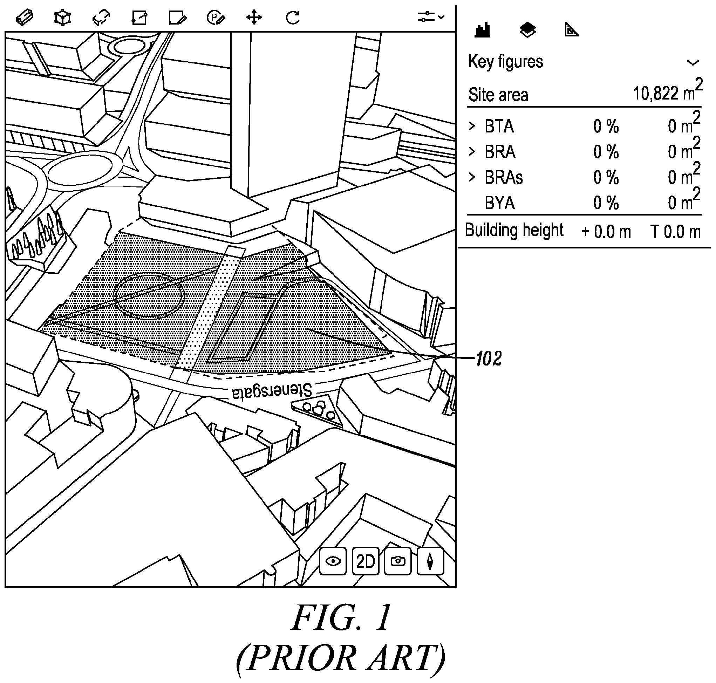

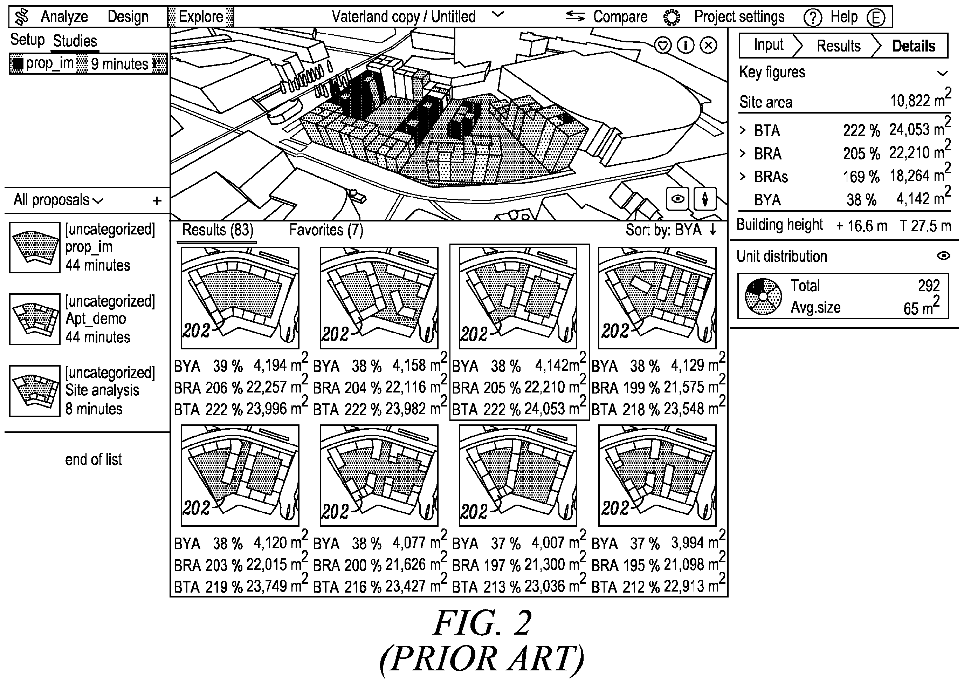

Prior art design systems may utilize a standard generative approach for generating complicated building systems based on a line drawing input. FIG. 1 illustrates a prior art line drawing where a user has identified an area 102 to utilize as input to a generate design system. Generative design is an iterative design process that involves a program that generates a certain number of outputs that meet certain constraints, and a designer will fine tune the feasible region by selecting specific output or changing input values, ranges, and distribution. In particular, in architecture, generative design does not construct fixed geometries, but takes a set of design rules/areas and generates an infinite set of possible design solutions. A user defines parameters and rules (e.g., by specifying an area 102 to be used as input), and the generative approach attempts to provide a solution satisfying the user input. FIG. 2 illustrates the various prior art generative design outputs 202 that have been generated based on the input 102 of FIG. 1.

Such prior art generative design systems are flawed in that the design process becomes unidirectional such that the inputs produce outputs and changes cannot be directly made to the output without breaking the higher level parametrization that defines the generative process. Instead, to work with and/or adjust the outputs, users must start the generative design process over by reverting back to the input, modifying the input parameters, and re-executing the generative design process to acquire new output design solutions. It is desirable to have the strength of a generative design process without having to revert to the beginning of the process by providing a malleable capability to directly manipulate the output itself while also maintaining the ability to adjust the input parameters at a later time (i.e., the capability to go back and forth between adjusting the inputs and outputs).

Further to the above, it is also desirable to have a generative system where the generated designs are flexible such that generated output may include details (e.g., specific types of buildings and designs for new geographies, new verticals, new ways of working, and/or new "scales") that may be autogenerated, may be specified by the user once a general structure/footprint has been generated, and/or may be changed as desired either before or after the generative design process has been performed.

### SUMMARY OF THE INVENTION

Embodiments of the invention provide a building system and elements for designing a space/area in a computer aided design (CAD) / building information model (BIM) system. In particular, a programmatic concept referred to as an "Element" contains a detailed geometric model, a parametric routine to generate a detailed geometric model to fit the shape of the element dynamically, or may contain other Elements. Further, the Element provides a summary of its content that enables an outside application/process to interact with and process the Element intelligently without accessing the detailed geometric model contained therein. The parametric routine is referred to/defined by a programmatic concept of a "Program" that includes logic for generating an Element from a "parent" Element. An Element may be constrained or encapsulated by a programmatic concept referred to as an "Envelope" that contains or otherwise places all of the Element's contents.

In view of the above, an Element, Program, and Envelope provide a hierarchical structure that can be used to define a space within a 3D model/design in a manner that enables each programmatic concept to be modified/edited in such a manner that minimizes the effects of such modifications to other programmatic concepts. Thus, for example, the length of a single line envelope may be modified resulting in a modification to a number of geometric models placed along such an envelope. Simultaneously, the geometric models (or Program used to generate and place such geometric models) may be edited without affecting the Envelope itself. Embodiments of the invention enable such processing flexibility by the Program only needing to know the Envelopes of the child Elements, with any internal content of those elements being effectively screened from the Program's notice. This bounds the logical reach of propagated changes and allows consistent update propagation.

### BRIEF DESCRIPTION OF THE DRAWINGS

Referring now to the drawings in which like reference numbers represent corresponding parts throughout:
FIG. 1 illustrates a prior art line drawing where a user has identified an area to utilize as input to a generate design system;
FIG. 2 illustrates various prior art generative design outputs that have been generated based on the input of FIG. 1;
FIG. 3 illustrates the general structure of an element in accordance with one or more embodiment of the invention;
FIGs. 4A and 4B illustrate Elements structured in hierarchies with nesting in accordance with one or more embodiments of the invention;
FIG. 5 illustrates the process for performing a full update on a model in real time upon performance of any edit in accordance with one or more embodiments of the invention;
FIGs. 6-8 illustrate an exemplary graphical user interface that reflects geometric encapsulation and program structure in accordance with one or more embodiments of the invention
FIGs. 9A-9C illustrate an alternative graphical user interface embodiment where geometry has been encapsulated in accordance with one or more embodiments of the invention;
FIG. 10 illustrates the logical flow for designing a space in a CAD application in accordance with one or more embodiments of the invention;
FIG. 11 is an exemplary hardware and software environment used to implement one or more embodiments of the invention; and
FIG. 12 schematically illustrates a typical distributed/cloud-based computer system using a network to connect client computers to server computers in accordance with one or more embodiments of the invention.

### DETAILED DESCRIPTION OF THE INVENTION

In the following description, reference is made to the accompanying drawings which form a part hereof, and which is shown, by way of illustration, several embodiments of the present invention. It is understood that other embodiments may be utilized and structural changes may be made without departing from the scope of the present invention.

### Overview

Building systems of embodiments of the invention are fundamentally an attempt to decouple potentially detailed building geometries from the logic by which various geometries may be placed on a site or assembled into composite structures. In this regard, embodiments of the invention enable the use of tools that embody a certain "smartness" (e.g., generative design or assisted drawing) without having to reason about all of the geometrical details. Prior art systems have been unable to achieve such capabilities, with existing tools being either (a) "smart" and flexible but without detailed geometry; (b) inflexible, special purpose generative tools that generate a certain kind of detailed geometry (or toolboxes for tech savvy users to build such tools); or (c) tools for drawing/manipulating detailed geometry manually, which gives a lot of control and flexibility, but no "smartness".

Embodiments of the invention combine two central concepts: (a) geometry encapsulation; and (b) program structure.

### Geometry Encapsulation and Program Structure

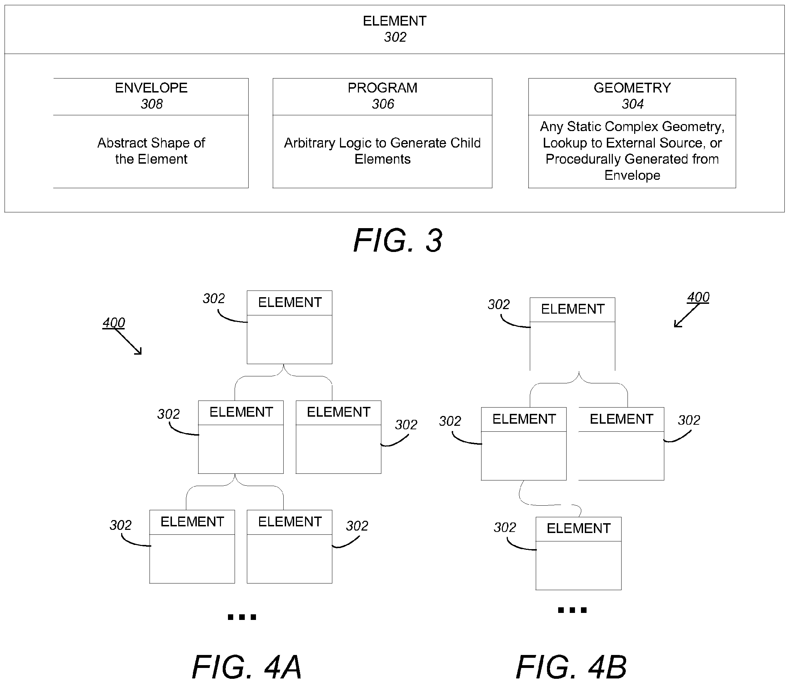

FIGs. 3 and 4A-4B illustrate the general structure for geometry encapsulation and program structure in accordance with one or more embodiments of the invention.

FIG. 3 illustrates the general structure of an element (i.e., geometry encapsulation) in accordance with one or more embodiment of the invention. An "Element" 302 is a way to encapsulate geometry 304. Element 302 can contain a detailed geometric model, a parametric routine to generate a detailed geometrical model to fit the shape of the element (i.e., the Envelope) dynamically, or it can contain other Elements 302 (which again may contain yet more Elements 302 in a nested fashion [as illustrated in FIGs. 4A-4B]). Elements 302 carry a sort of standardized summary of their contents as metadata that enables any outside process to handle the Element 302 intelligently without looking at the geometrical content of the Element 302. As illustrated in FIG. 3, geometry 304 may consist of any static complex geometry, a look-up to an external source, or it may be procedurally generated from an Envelope 308. In this regard, an Envelope 308 refers to the abstract shape of the Element 302.

FIGs. 4A and 4B illustrate Elements 302 structured in hierarchies with nesting (having parent and child elements 302) in accordance with one or more embodiments of the invention. As another example of an Element 302, the Element 302 hierarchy 400 may be structured such that each Element 302 represents a floor/story in a section of a building with children Elements 302 representing different living units in the building such as the actual décor or hallway. The hierarchical structure 400 can have further branches with children representing furniture and doors/door handles. Thus, in a simple Element 302 (e.g., without a program 306), a whole building may be represented by a hierarchy 400 of nested components with building sections, sections carrying floors, and floors carrying units. It may be noted that the framework of an Element 302 is detail agnostic such that an Element 302 may consist of a town or door handle.

The second central concept consists of a structure for a piece of arbitrary logic to generate one or more (child) Elements 302 from some (parent) Element 302. Such a piece of logic is referred to as a "Program" 306. An example of a Program 306 is a program that generates Elements 302 describing floors from an Element 302 describing a building. Such a Program 306 would, for example, add and subtract floors as needed if the user changes the height of the building Element 302. Notably, a Program 306 may also specify the Programs 306 applied to the generated Elements 302 allowing the user to specify a "master program" complex logic of nested Elements 302 and Programs 306, which once defined would be very easily reusable across designs and projects. A different way to understand the concept of a Program 306 is to think of the Program 306 as plug-in logic that can be created by anyone and describe Elements 302. However, outside of the Element 302 that carries a program, it is not necessary for the user or other software components to know if and/or whether an Element 302 contains a Program 306 or not. Thus, an Element 302 containing a floor with a certain set of units is indistinguishable from a floor that has a smart Program 306 that is used to generate units.

Further to the above, in embodiments of the invention, Elements 302 may be composed of metadata together with an Envelope 308. An Envelope 308 is a piece of simple geometry that contains or otherwise places all of the Element's contents. In other words, Programs 306 and Elements 302 may be constrained by the Envelope 308 (i.e., the Envelope 308 provides a space confining property). However, the constraint may not be a hard constraint such that certain properties may be permitted to extend beyond the Envelope space. The most basic example would be an Envelope 308 that is simply the 3D bounding box of the static complex geometric model 304 it contains. Another example would be a line segment Envelope 308 along which contained Elements 302 or Geometries 304 are placed. An Envelope 308 may encapsulate a piece of 3D space, or may encapsulate 1D space (e.g., constraining an Element 302 between two infinite lines). Another way to view an Envelope 308 is as a hierarchical node that contains (or otherwise places) all children nodes.

Elements 302 can contain geometry 304 (static or dynamic) and other Elements 302 independently. One use for this could be for a building Element 302 to contain the Geometry 304 of the building outer shell, while at the same time containing Elements 302 making up the individual floors, each carrying their internal Geometry 304. Programs 306 may also take the current Envelope 308 and an existing child Element 302 as input, and regenerate the list of child Elements 302. This means a Program 306 filling a box shaped Envelope 308 with floors can respond both to changes in the shape of the box and to changes made to the currently existing floors.

### Model Update

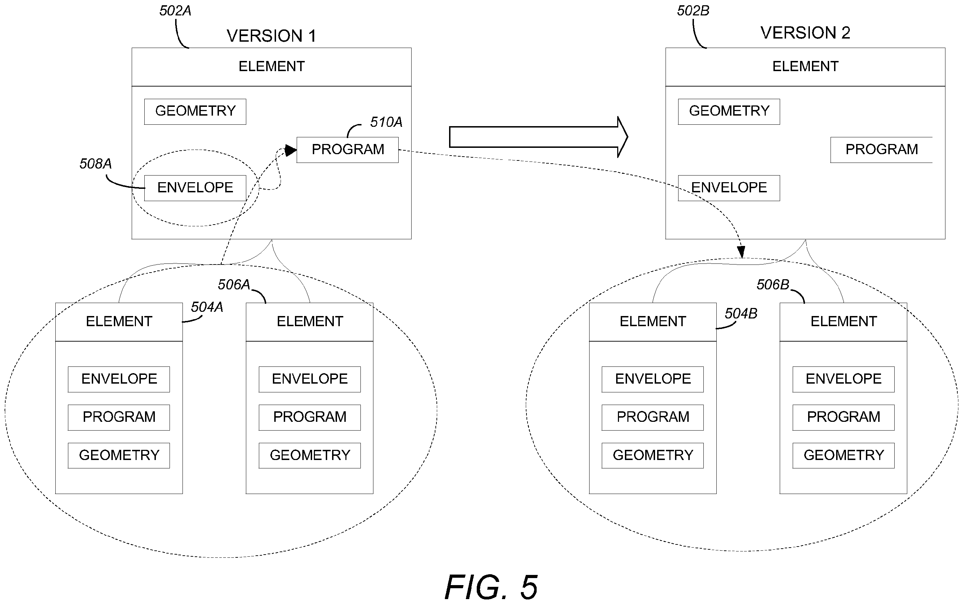

FIG. 5 illustrates the process for performing a full update on a model in real time upon performance of any edit in accordance with one or more embodiments of the invention. When a change is made to the model (e.g., version 1 502A), the hierarchical tree (e.g., including elements 504A and 506A) representing the model 502A is recursively processed while attempting to preserve the hierarchical structure. More specifically, a modification to the model results in an evaluation to any element/program/envelope below the element/program/envelope that was modified (i.e., a downward progression through the hierarchical tree) while making the minimum amount of changes to try to preserve the hierarchical structure. Thus, in FIG. 5, envelope 508A has been modified and as a result, program 510A and Elements 504A and 506A (which all are contained within envelope 508A) are updated while attempting to maintain the same hierarchical structure. The result is Version 2 502B in which elements 504B and 506B are still in the same hierarchical structure.

The model update process of embodiments of the invention may be contrasted with prior art methods in which the entire model is regenerated without any preservation of existing hierarchical structures/elements. In this regard, in the prior art generative approach, elements generate sub-elements and each layer is regenerated with the previous layers as an input. Such a generative approach severely limits the types of modifications that may be performed because geometry is changed into being a derivative of its parent layer. Accordingly, if the user designs a floor plan at a higher level and then adjusts lower level elements, the context and changes to those elements are lost if the floor plan is changed (i.e., the lower level elements are regenerated again based on the changes to the higher level floor plan).

### Exemplary Model Interface

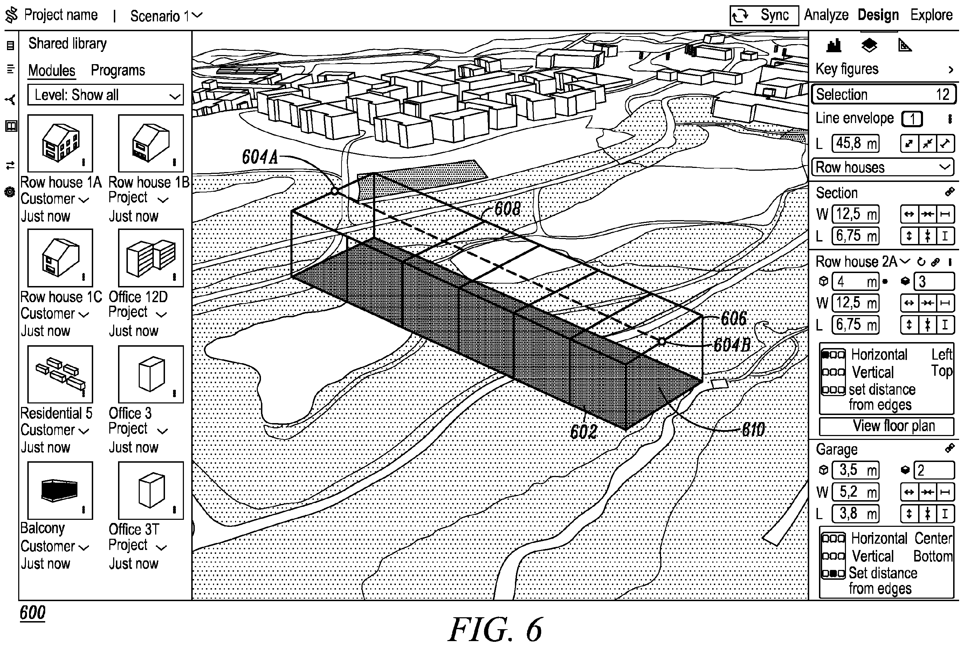

FIGs. 6-8 illustrate an exemplary graphical user interface that reflects geometric encapsulation and program structure in accordance with one or more embodiments of the invention. In FIG. 6, the user has drawn a simple 3D line building row 602 in the 3D model 600. Adjustments may be made the simple 3D line building row 602 by grabbing either grip glyph 604A/604B (e.g., via a cursor control device) and moving the grip glyph 604 as desired. Different movements may be used to perform different operations, e.g., to change the angle of the line 602, height/length/angle of the 3D structure. Further, by selecting a different part of the simple 3D line building row 602 (e.g., via different grip glyphs that may be displayed), the user can manipulate the geometry in a different manner. For example, selecting a corner 606 may enable the width/height of one side to be changed. Similarly, selecting and moving one of the lines (e.g., line 608) may enable the widening of the footprint on the top and/or the creation of a slanted roof/top. In another example, selection of the side end 610 may extend the figure or a rotation symbol may be displayed to allow the entire footprint to be rotated in a desired direction. In this manner, the simple 3D line building row 602 may be viewed as a smart tool for designing the geometry in the 3D model 600.

Once the general footprint has been configured as desired, the manner in which the footprint is filled and or an additional layer/level of detail may be defined/selected. In this regard, for each box of 3D line building row 602 (or for the entire row), the user may specify particular elements to place in the box. Alternatively, a program may be used to define how the boxes should be filled.

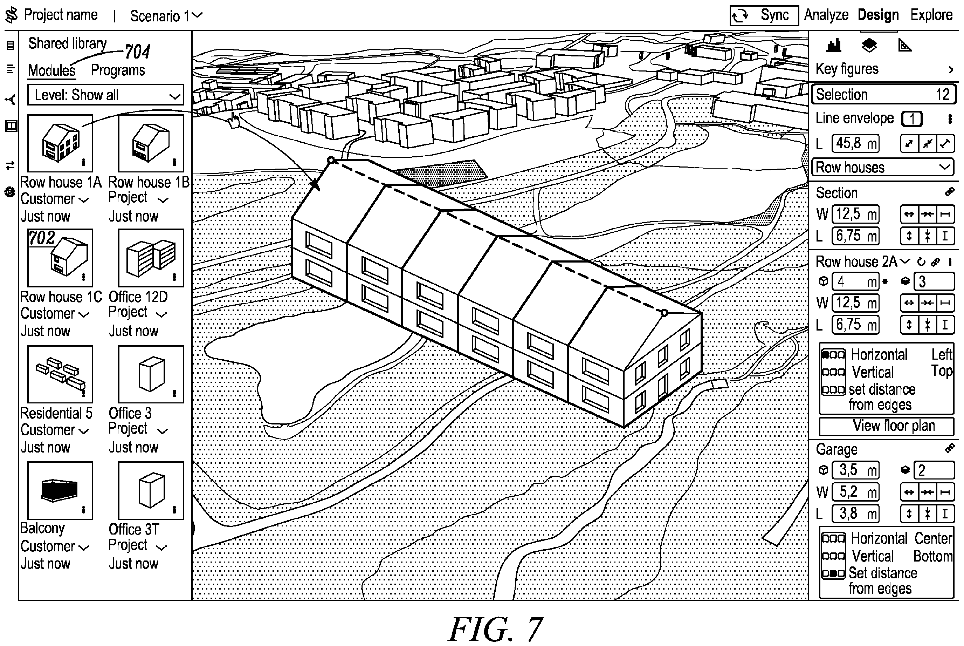

In FIG. 7, the user has selected icon for row house 1A 702 from the shared library of modules 704 to be used as the basis for filling the footprint for 3D line building row 602. Once selected, row house 1A 702 is used to determine how the boxes in 3D line building row 602 should be filled. FIG. 7 shows the resulting geometry that fills the 3D line building row 602 with row house 1A 702 geometry modules. In this regard, any one of the modules in library 704 consistent with the rectangular footprint may be used to fill boxes of the 3D line building row 602. Selected modules may include rules that determine how to configure particular aspects (e.g., depending on the length and size of the footprint). The user can easily specify the rules (e.g., by selecting a module and or manually defining rules) for which modules can be put at the ends of the row 602, how many floors, etc.

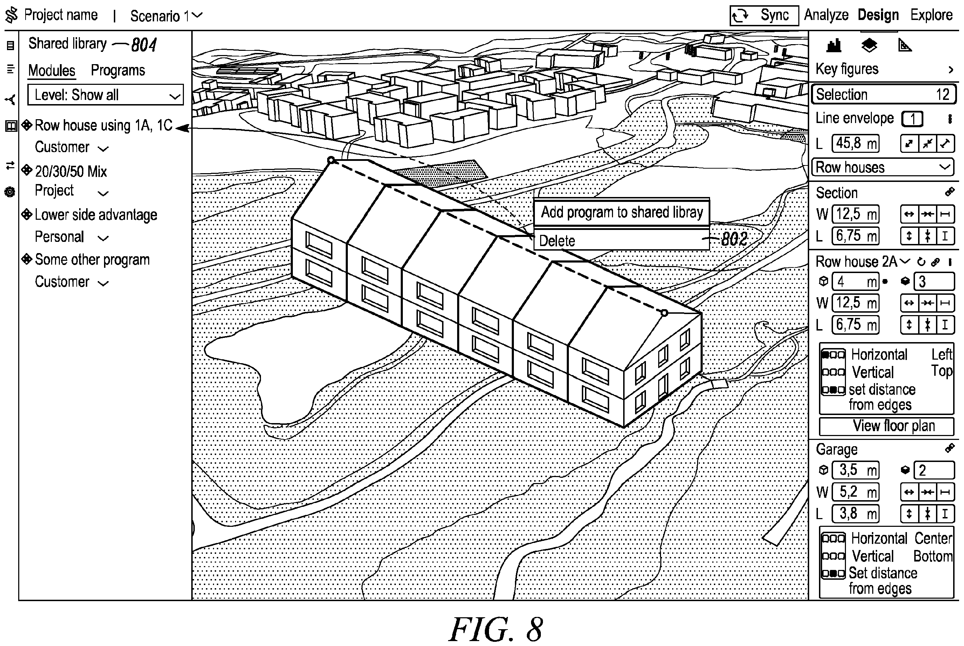

Referring now to FIG. 8, once the desired configuration has been defined by the user, the user can save the configuration. Thus, as illustrated, the user can opt via option/dialog box 802 to add the program (which fills the boxes of the 3D line building row 602 with row house 1A 702 and row house 1C) to the shared library 804. In such a manner, the 3D line building row 602 provides the flexibility to design/configure the footprint while the user can edit/add details/configure how the details of the footprint are to be filled. Thereafter, the user can save the resulting configuration back to the library for further use/editing (e.g., for use by the same user or by other users if the module is made publicly available).

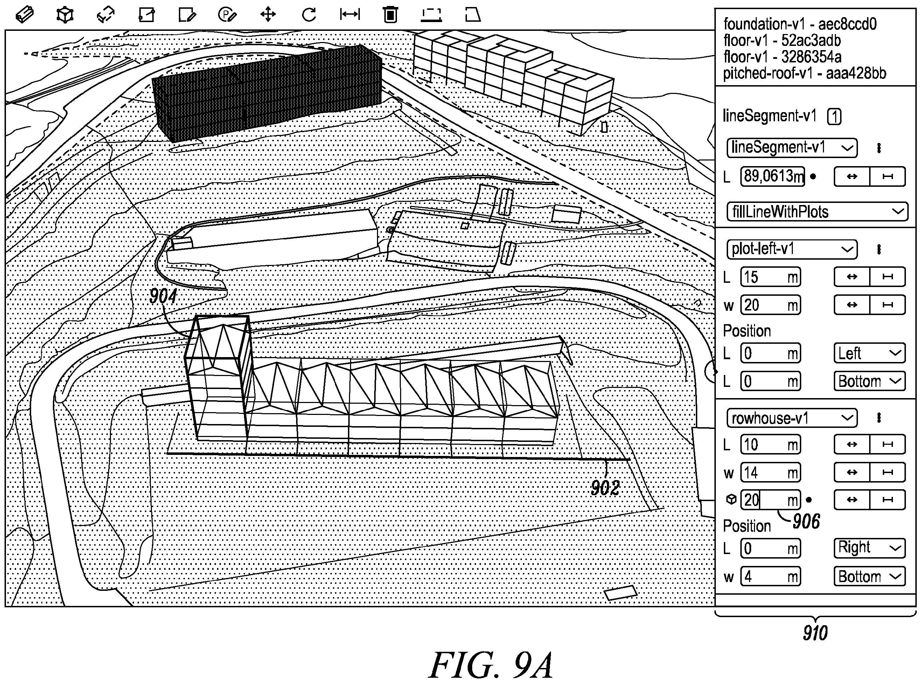

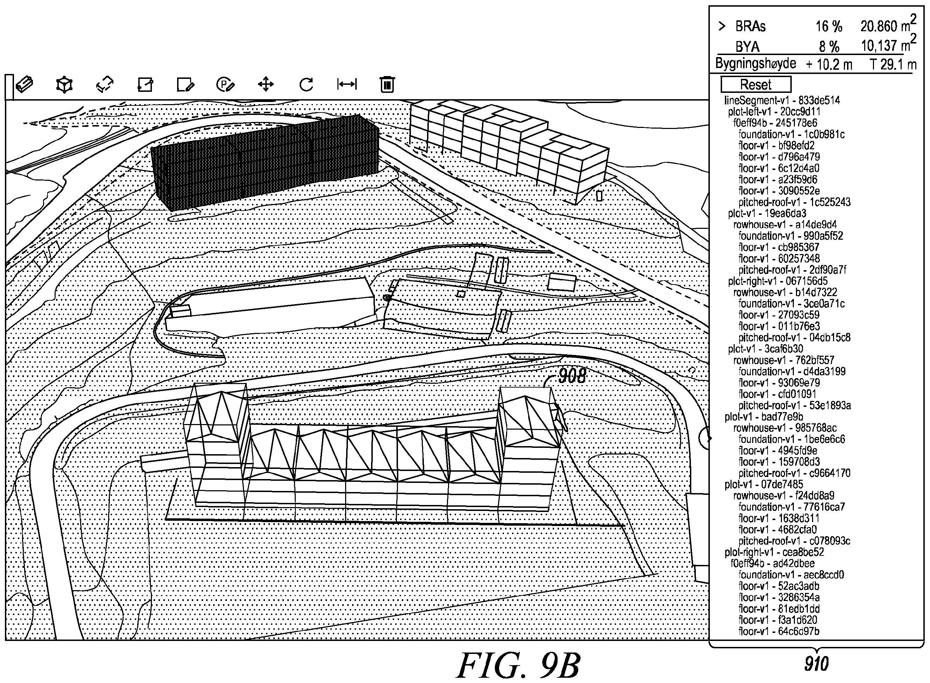

FIGs. 9A-9C illustrate an alternative graphical user interface embodiment where geometry has been encapsulated in accordance with one or more embodiments of the invention. In particular, the user may draw and move line 902 to determine the general placement of geometry within the 3D model. Once line 902 has been drawn, individual boxes 904 may be selected and used to modify particular aspects of the geometry along line 902. As illustrated, the user has selected box 904 and has adjusted the height using text entry field 906. Once adjusted, the user can use the new height as a preset height for one or more of the other boxes (e.g., the boxes at either end of the line 902). FIG. 9B illustrates how the same height/pre-configuration for box 904 was used to establish the height for a selected box 908. Further, the user can drag the line 902 to adjust the length/angle of the entire geometry. By adjusting the length and angle of line 902, embodiments of the invention will automatically add or remove the number of preconfigured modules used to fill the footprint.

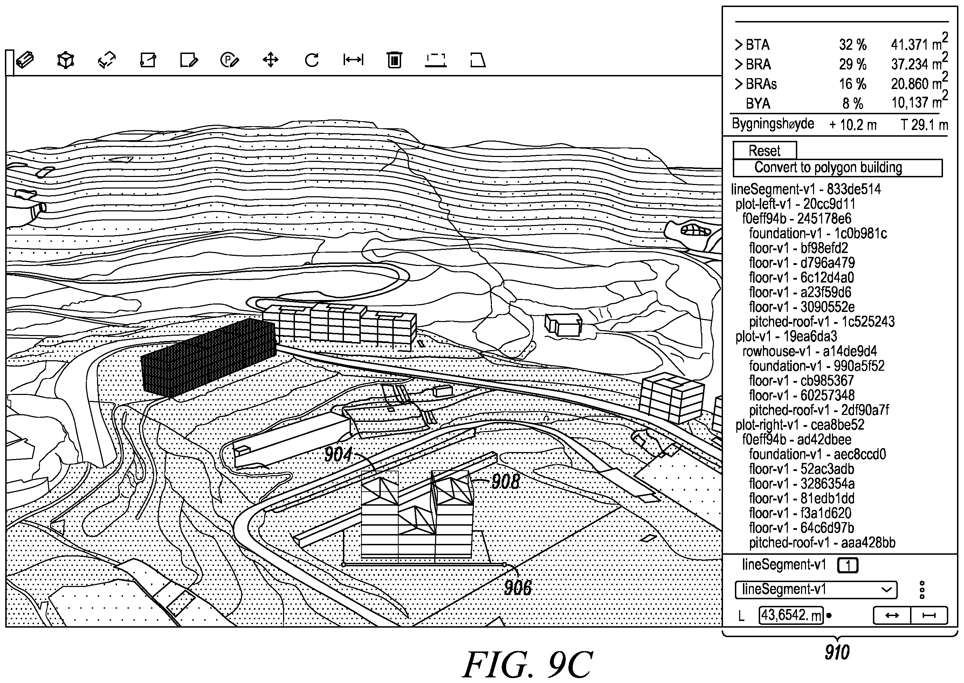

FIG. 9C illustrates the result the adjusting the total length of line 902 such that the number of housing units filling the footprint have been automatically adjusted (e.g., in real time dynamically as the line 902 is adjusted). Thus, FIGs. 9A-9C illustrate how floor elements are updated and depend on parent boxes to determine how much space is available along particular dimensions while adjusting automatically based thereon. Further, FIGs. 9A-9C illustrate the use and update of presets such that if dimensions change, such dimensions can be pushed to all instances of the preset (e.g., the end boxes 904 and 908). In addition, the different text fields available in the graphical user interface (i.e., in area 910) may be used to adjust either the entire line 902 and/or particular attributes of individual components/boxes that are instantiated/used to define the geometry along line 902.

### Logical Flow

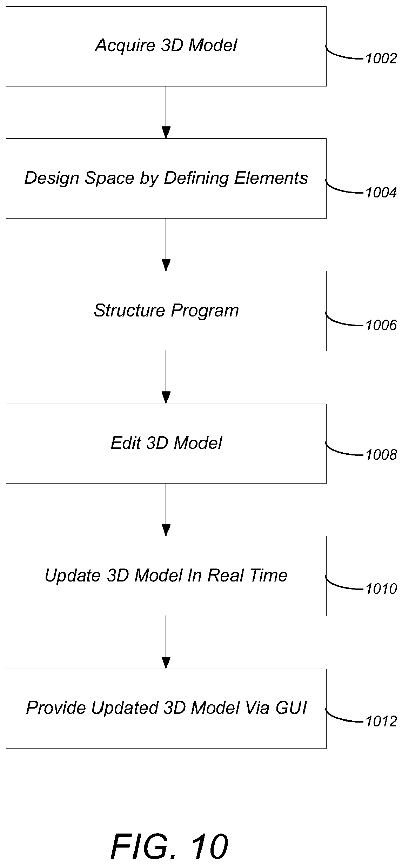

FIG. 10 illustrates the logical flow for designing a space in a CAD application in accordance with one or more embodiments of the invention.

At step 1002, a 3D model is acquired in a CAD application.

At step 1004, the space is designed in the CAD application by defining one or more Elements. Each of the one or more Elements encapsulates a geometric model within the 3D model. Further, each of the one or more Elements comprises metadata. The metadata is a summary of contents in each Element and enables an outside process to handle each Element without access to the geometric model encapsulated in each Element. In addition, the one or more Elements consist of a parent Element and one or more child Elements. In one or more embodiments of the invention, each Element consists of the geometric model, the Program, and/or other Elements.

At step 1006, a Program is structured to generate a list of the one or more child Elements from the parent Element. The program consists of arbitrary logic. In one or more embodiments of the invention, the Program consists of a parametric routine to generate the geometric model to fit a shape of the one or more Elements dynamically.

In one or more embodiments, the defining of the space 1004 and the program structuring 1006 may also include the defining of an envelope that contains each of the one or more Elements. Such an envelope may consist of an abstract shape of the Element (i.e., that the Envelope contains). For example, the Envelope may consist of a 3D bounding box of the geometric model. Alternatively, the Envelope may consist of a line segment along which the contained Element is placed. In one or more embodiments, input to the Program may consist of the Envelope and the parent Element, and the Program regenerates the list of one or more child Elements.

At step 1008, the 3D model is edited.

At step 1010, in response to the editing, the 3D model is updated in real time. During the updating, the Program is re-executed thereby updating the one or more child elements in the list. In addition, during the updating, the Program attempts to conserve a hierarchical structure of the one or more Elements.

In view of the above, the manner in which the Program, Envelope, and Elements are structured/updated enable an attempted conservation/preservation of the hierarchical structure. More specifically, the Envelopes serve as a boundary to the scope of change propagation in the following way: when a change is made to an Element (A), it can entail a change to that Element's Envelope (e.g., if the Element is a cubic building and the height of the building is changed, the overall cubic shape containing the building may be enlarged). If the Envelope is changed, this has an effect both upward and downward in the hierarchy.

Downward (or within the Element): the changed Envelope affects both Program execution (and hence shape and/or number of children) and the generation of any dynamic Geometry in the Element itself. Since the child Elements can have their Envelope changed, this downward propagation carries on recursively until it encounters the leaf nodes of the Element graph.

Upward: the change can propagate only to the program execution of the parent Element (B) and no further up. An example of this is if we change the height of a floor Element Envelope, then the Program stacking floors needs to accommodate the new dimensions and might add or remove child Elements or change the Envelopes of child elements to distribute the available space. For example, one or more floors might have a flexible height that allows them to absorb the change without adding or removing floors (the specifics of the Program determines if this is the case). Any Element that has its Envelope changed in turn has to recompute its Program or dependant Geometry, and so on downward recursively. The crucial point is that the Envelope of the parent Element (B) is never affected by the change in the original Element (A) and hence any Element above (B) does not "see" this chain of updates since it only needs to know the Envelope of (B).

An alternate way of viewing this could be to say that the edit of the Envelope of (A) triggers a change in the Program "in charge" of (A), which may also be the Program of the parent Element (B) - meaning the Program that generates and/or handles any children that B might have. If this is the case, then each child of (B) - including (A) - is the subject of a recursive downward update that propagates down to the leaf nodes.

Stated in other words, the editing in step 1008 modifies a first Element of the one or more Elements. Such edits cause a change to a first Envelope that contains the first Element. The change to the first Envelope downwardly affects execution of the Program and generation of the Geometric model encapsulated in the first Element. Further, the updating propagates downward through the one or more child Elements until a leaf node of the hierarchical structure is encountered. In addition, the change to the first Envelope upwardly affects the Program of the (immediate) parent Element, wherein the Program of the parent Element re-executes in response to the change to the first Envelope (i.e., of the first Element). This, in turn, might cause changes to both other child Elements of immediate parent of the first Element, and to the immediate parent's contained Geometry. However, it would never cause a change to the Envelope of the immediate parent Element.

At step 1012, the updated 3D model is provided via a graphical user interface. The graphical user interface enables editing of the geometric model and the one or more Elements in the space.

### Hardware Environment

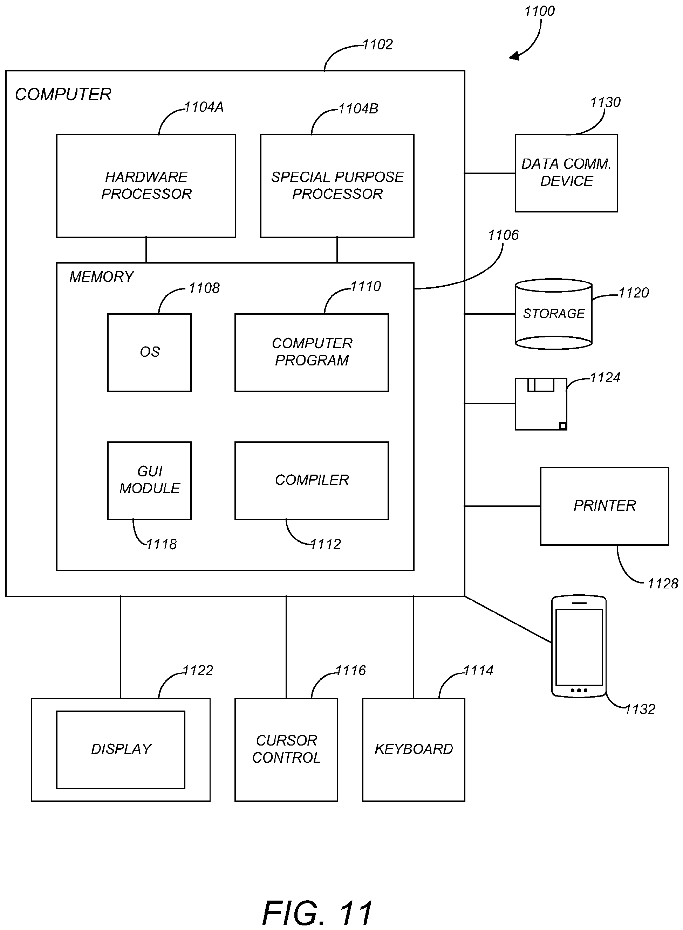

FIG. 11 is an exemplary hardware and software environment 1100 (referred to as a computer-implemented system and/or computer-implemented method) used to implement one or more embodiments of the invention. The hardware and software environment includes a computer 1102 and may include peripherals. Computer 1102 may be a user/client computer, server computer, or may be a database computer. The computer 1102 comprises a hardware processor 1104A and/or a special purpose hardware processor 1104B (hereinafter alternatively collectively referred to as processor 1104) and a memory 1106, such as random access memory (RAM). The computer 1102 may be coupled to, and/or integrated with, other devices, including input/output (I/O) devices such as a keyboard 1114, a cursor control device 1116 (e.g., a mouse, a pointing device, pen and tablet, touch screen, multi-touch device, etc.) and a printer 1128. In one or more embodiments, computer 1102 may be coupled to, or may comprise, a portable or media viewing/listening device 1132 (e.g., an MP3 player, IPOD, NOOK, portable digital video player, cellular device, personal digital assistant, etc.). In yet another embodiment, the computer 1102 may comprise a multi-touch device, mobile phone, gaming system, internet enabled television, television set top box, or other internet enabled device executing on various platforms and operating systems.

In one embodiment, the computer 1102 operates by the hardware processor 1104A performing instructions defined by the computer program 1110 (e.g., a computer-aided design [CAD] application) under control of an operating system 1108. The computer program 1110 and/or the operating system 1108 may be stored in the memory 1106 and may interface with the user and/or other devices to accept input and commands and, based on such input and commands and the instructions defined by the computer program 1110 and operating system 1108, to provide output and results.

Output/results may be presented on the display 1122 or provided to another device for presentation or further processing or action. In one embodiment, the display 1122 comprises a liquid crystal display (LCD) having a plurality of separately addressable liquid crystals. Alternatively, the display 1122 may comprise a light emitting diode (LED) display having clusters of red, green and blue diodes driven together to form full-color pixels. Each liquid crystal or pixel of the display 1122 changes to an opaque or translucent state to form a part of the image on the display in response to the data or information generated by the processor 1104 from the application of the instructions of the computer program 1110 and/or operating system 1108 to the input and commands. The image may be provided through a graphical user interface (GUI) module 1118. Although the GUI module 1118 is depicted as a separate module, the instructions performing the GUI functions can be resident or distributed in the operating system 1108, the computer program 1110, or implemented with special purpose memory and processors.

In one or more embodiments, the display 1122 is integrated with/into the computer 1102 and comprises a multi-touch device having a touch sensing surface (e.g., track pod or touch screen) with the ability to recognize the presence of two or more points of contact with the surface. Examples of multi-touch devices include mobile devices (e.g., IPHONE, NEXUS S, DROID devices, etc.), tablet computers (e.g., IPAD, HP TOUCHPAD, SURFACE Devices, etc.), portable/handheld game/music/video player/console devices (e.g., IPOD TOUCH, MP3 players, NINTENDO SWITCH, PLAYSTATION PORTABLE, etc.), touch tables, and walls (e.g., where an image is projected through acrylic and/or glass, and the image is then backlit with LEDs).

Some or all of the operations performed by the computer 1102 according to the computer program 1110 instructions may be implemented in a special purpose processor 1104B. In this embodiment, some or all of the computer program 1110 instructions may be implemented via firmware instructions stored in a read only memory (ROM), a programmable read only memory (PROM) or flash memory within the special purpose processor 1104B or in memory 1106. The special purpose processor 1104B may also be hardwired through circuit design to perform some or all of the operations to implement the present invention. Further, the special purpose processor 1104B may be a hybrid processor, which includes dedicated circuitry for performing a subset of functions, and other circuits for performing more general functions such as responding to computer program 1110 instructions. In one embodiment, the special purpose processor 1104B is an application specific integrated circuit (ASIC).

The computer 1102 may also implement a compiler 1112 that allows an application or computer program 1110 written in a programming language such as C, C++, Assembly, SQL, PYTHON, PROLOG, MATLAB, RUBY, RAILS, HASKELL, or other language to be translated into processor 1104 readable code. Alternatively, the compiler 1112 may be an interpreter that executes instructions/source code directly, translates source code into an intermediate representation that is executed, or that executes stored precompiled code. Such source code may be written in a variety of programming languages such as JAVA, JAVASCRIPT, PERL, BASIC, etc. After completion, the application or computer program 1110 accesses and manipulates data accepted from I/O devices and stored in the memory 1106 of the computer 1102 using the relationships and logic that were generated using the compiler 1112.

The computer 1102 also optionally comprises an external communication device such as a modem, satellite link, Ethernet card, or other device for accepting input from, and providing output to, other computers 1102.

In one embodiment, instructions implementing the operating system 1108, the computer program 1110, and the compiler 1112 are tangibly embodied in a non-transitory computer-readable medium, e.g., data storage device 1120, which could include one or more fixed or removable data storage devices, such as a zip drive, floppy disc drive 1124, hard drive, CD-ROM drive, tape drive, etc. Further, the operating system 1108 and the computer program 1110 are comprised of computer program 1110 instructions which, when accessed, read and executed by the computer 1102, cause the computer 1102 to perform the steps necessary to implement and/or use the present invention or to load the program of instructions into a memory 1106, thus creating a special purpose data structure causing the computer 1102 to operate as a specially programmed computer executing the method steps described herein. Computer program 1110 and/or operating instructions may also be tangibly embodied in memory 1106 and/or data communications devices 1130, thereby making a computer program product or article of manufacture according to the invention. As such, the terms "article of manufacture," "program storage device," and "computer program product," as used herein, are intended to encompass a computer program accessible from any computer readable device or media.

Of course, those skilled in the art will recognize that any combination of the above components, or any number of different components, peripherals, and other devices, may be used with the computer 1102.

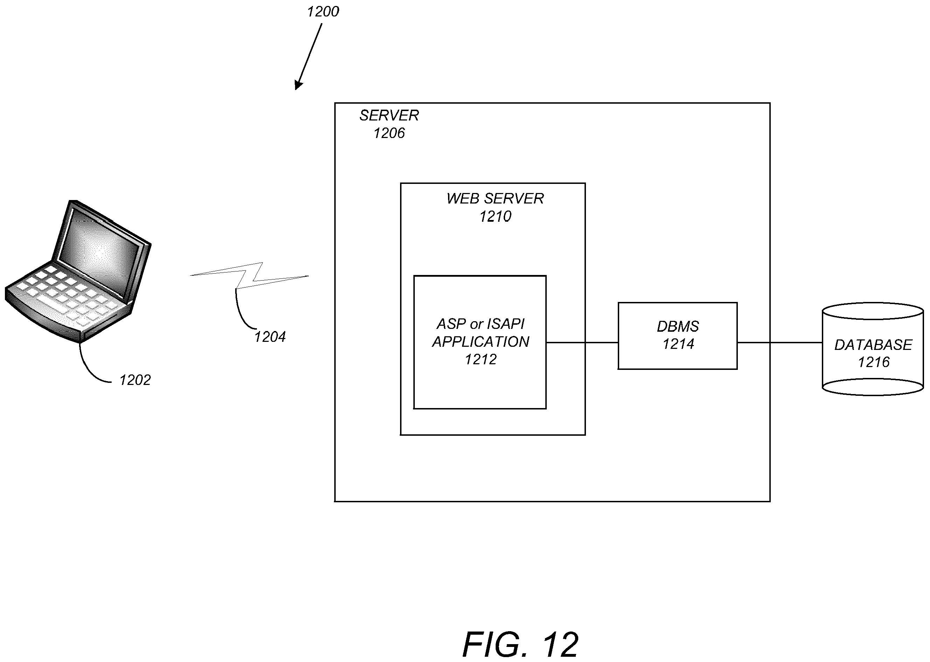

FIG. 12 schematically illustrates a typical distributed/cloud-based computer system 1200 using a network 1204 to connect client computers 1202 to server computers 1206. A typical combination of resources may include a network 1204 comprising the Internet, LANs (local area networks), WANs (wide area networks), SNA (systems network architecture) networks, or the like, clients 1202 that are personal computers or workstations (as set forth in FIG. 11), and servers 1206 that are personal computers, workstations, minicomputers, or mainframes (as set forth in FIG. 11). However, it may be noted that different networks such as a cellular network (e.g., GSM [global system for mobile communications] or otherwise), a satellite based network, or any other type of network may be used to connect clients 1202 and servers 1206 in accordance with embodiments of the invention.

A network 1204 such as the Internet connects clients 1202 to server computers 1206. Network 1204 may utilize ethernet, coaxial cable, wireless communications, radio frequency (RF), etc. to connect and provide the communication between clients 1202 and servers 1206. Further, in a cloud-based computing system, resources (e.g., storage, processors, applications, memory, infrastructure, etc.) in clients 1202 and server computers 1206 may be shared by clients 1202, server computers 1206, and users across one or more networks. Resources may be shared by multiple users and can be dynamically reallocated per demand. In this regard, cloud computing may be referred to as a model for enabling access to a shared pool of configurable computing resources.

Clients 1202 may execute a client application or web browser and communicate with server computers 1206 executing web servers 1210. Such a web browser is typically a program such as MICROSOFT INTERNET EXPLORER/EDGE, MOZILLA FIREFOX, OPERA, APPLE SAFARI, GOOGLE CHROME, etc. Further, the software executing on clients 1202 may be downloaded from server computer 1206 to client computers 1202 and installed as a plug-in or ACTIVEX control of a web browser. Accordingly, clients 1202 may utilize ACTIVEX components/component object model (COM) or distributed COM (DCOM) components to provide a user interface on a display of client 1202. The web server 1210 is typically a program such as MICROSOFT'S INTERNET INFORMATION SERVER.

Web server 1210 may host an Active Server Page (ASP) or Internet Server Application Programming Interface (ISAPI) application 1212, which may be executing scripts. The scripts invoke objects that execute business logic (referred to as business objects). The business objects then manipulate data in database 1216 through a database management system (DBMS) 1214. Alternatively, database 1216 may be part of, or connected directly to, client 1202 instead of communicating/obtaining the information from database 1216 across network 1204. When a developer encapsulates the business functionality into objects, the system may be referred to as a component object model (COM) system. Accordingly, the scripts executing on web server 1210 (and/or application 1212) invoke COM objects that implement the business logic. Further, server 1206 may utilize MICROSOFT'S TRANSACTION SERVER (MTS) to access required data stored in database 1216 via an interface such as ADO (Active Data Objects), OLE DB (Object Linking and Embedding DataBase), or ODBC (Open DataBase Connectivity).

Generally, these components 1200-1216 all comprise logic and/or data that is embodied in/or retrievable from device, medium, signal, or carrier, e.g., a data storage device, a data communications device, a remote computer or device coupled to the computer via a network or via another data communications device, etc. Moreover, this logic and/or data, when read, executed, and/or interpreted, results in the steps necessary to implement and/or use the present invention being performed.

Although the terms "user computer", "client computer", and/or "server computer" are referred to herein, it is understood that such computers 1202 and 1206 may be interchangeable and may further include thin client devices with limited or full processing capabilities, portable devices such as cell phones, notebook computers, pocket computers, multi-touch devices, and/or any other devices with suitable processing, communication, and input/output capability.

Of course, those skilled in the art will recognize that any combination of the above components, or any number of different components, peripherals, and other devices, may be used with computers 1202 and 1206. Embodiments of the invention are implemented as a software/CAD application on a client 1202 or server computer 1206. Further, as described above, the client 1202 or server computer 1206 may comprise a thin client device or a portable device that has a multi-touch-based display.

### Conclusion

This concludes the description of the preferred embodiment of the invention. The following describes some alternative embodiments for accomplishing the present invention. For example, any type of computer, such as a mainframe, minicomputer, or personal computer, or computer configuration, such as a timesharing mainframe, local area network, or standalone personal computer, could be used with the present invention.

The foregoing description of the preferred embodiment of the invention has been presented for the purposes of illustration and description. It is not intended to be exhaustive or to limit the invention to the precise form disclosed. Many modifications and variations are possible in light of the above teaching. It is intended that the scope of the invention be limited not by this detailed description, but rather by the claims appended hereto.

## Claims

1. A computer-implemented method for designing a space in a computer-aided design (CAD) application, comprising:
(a) acquiring a three-dimensional (3D) model in the CAD application;
(b) designing the space in the CAD application by defining one or more Elements, wherein:
(i) each of the one or more Elements encapsulates a geometric model within the 3D model;
(ii) each of the one or more Elements comprises metadata;
(iii) the metadata comprises a summary of contents in each Element;
(iv) the metadata enables an outside process to handle each Element without access to the geometric model encapsulated in each Element;
(v) the one or more Elements comprise a parent Element and one or more child Elements;
(c) structuring a Program to generate a list of the one or more child Elements from the parent Element, wherein the Program comprises arbitrary logic;
(d) editing the 3D model;
(e) in response to the editing, updating the 3D model in real time, wherein during the updating:
(i) the Program is reexecuted thereby updating the one or more child elements in the list; and
(ii) the Program attempts to conserve a hierarchical structure of the one or more Elements; and
(f) providing the updated 3D model via a graphical user interface, wherein the graphical user interface enables editing of the geometric model and the one or more Elements in the space.

2. The computer-implemented method of claim 1, wherein:
each Element comprises:
the geometric model;
the Program; or
other Elements.

3. The computer-implemented method of claim 1 or claim 2, wherein:
the Program comprises a parametric routine to generate the geometric model to fit a shape of the one or more Elements dynamically.

4. The computer-implemented method of any of claims 1-3, wherein:
each of the one or more Elements is contained by an Envelope; and
the Envelope comprises an abstract shape of the Element that the Envelope contains.

5. The computer-implemented method of claim 4, wherein:
the Envelope comprises a 3D bounding box of the geometric model; and/or
the Envelope comprises a line segment along which the contained Element is placed.

6. The computer-implemented method of claim 4 or claim 5, wherein:
input to the Program comprises the Envelope and the parent Element; and
the Program regenerates the list of one or more child Elements.

7. The computer-implemented method of any of claims 4-6, wherein:
the editing modifies a first Element of the one or more Elements;
the editing to the first Element causes a change to a first Envelope that contains the first Element;
the change to the first Envelope downwardly affects execution of the Program and generation of the Geometric model encapsulated in the first Element;
the updating propagates downward through the one or more child Elements until a leaf node of the hierarchical structure is encountered;
the change to the first Envelope upwardly affects the Program of the parent Element, wherein the Program of the parent Element re-executes in response to the change to the first Envelope.

8. A computer-implemented system for designing a space in a computer-aided design (CAD) application, comprising:
(a) a computer having a memory;
(b) a processor executing on the computer;
(c) the memory storing a set of instructions, wherein the set of instructions, when executed by the processor cause the processor to perform operations within the CAD application, the operations comprising:
(i) acquiring a three-dimensional (3D) model in the CAD application;
(ii) designing the space in the CAD application by defining one or more Elements, wherein:
(1) each of the one or more Elements encapsulates a geometric model within the 3D model;
(2) each of the one or more Elements comprises metadata;
(3) the metadata comprises a summary of contents in each Element;
(4) the metadata enables an outside process to handle each Element without access to the geometric model encapsulated in each Element;
(5) the one or more Elements comprise a parent Element and one or more child Elements;
(iii) structuring a Program to generate a list of the one or more child Elements from the parent Element, wherein the Program comprises arbitrary logic;
(iv) editing the 3D model;
(v) in response to the editing, updating the 3D model in real time, wherein during the updating:
(1) the Program is reexecuted thereby updating the one or more child elements in the list; and
(2) the Program attempts to conserve a hierarchical structure of the one or more Elements; and
(vi) providing the updated 3D model via a graphical user interface, wherein the graphical user interface enables editing of the geometric model and the one or more elements in the space.

9. The computer-implemented system of claim 8, wherein:
each Element comprises:
the geometric model;
the Program; or
other Elements.

10. The computer-implemented system of claim 8 or claim 9, wherein:
the Program comprises a parametric routine to generate the geometric model to fit a shape of the one or more Elements dynamically.

11. The computer-implemented system of any of claims 8-10, wherein:
each of the one or more Elements is contained by an Envelope; and
the Envelope comprises an abstract shape of the Element that the Envelope contains.

12. The computer-implemented system of claim 11, wherein:
the Envelope comprises a 3D bounding box of the geometric model; and/or
the Envelope comprises a line segment along which the contained Element is placed.

13. The computer-implemented system of claim 11 or claim 12, wherein:
input to the Program comprises the Envelope and the parent Element; and
the Program regenerates the list of one or more child Elements.

14. The computer-implemented system of any of claims 11-13, wherein:
the editing modifies a first Element of the one or more Elements;
the editing to the first Element causes a change to a first Envelope that contains the first Element;
the change to the first Envelope downwardly affects execution of the Program and generation of the Geometric model encapsulated in the first Element;
the updating propagates downward through the one or more child Elements until a leaf node of the hierarchical structure is encountered;
the change to the first Envelope upwardly affects the Program of the parent Element, wherein the Program of the parent Element re-executes in response to the change to the first Envelope.
